# EUROPEAN PATENT APPLICATION

(11) **EP 2 824 082 A1**
(43) Date of publication of application: **14.01.2015**
(21) Application number: 13176254.4
(22) Date of filing: 12.07.2013
(51) Int. Cl.: C02F 9/00, C02F 1/06, C02F 1/44, C02F 1/467, C02F 1/52, C02F 103/08

(54) **Process and apparatus for exploitation of seawater**

(71) Applicant: Hoffmann, Harry, 25436 Tornesch (DE); Nusair M. Nusair, Marwan, 21424 Jeddah (SA); Rusal ETC Llc, 660111 Krasnoyarsk (RU); Magnesium engineering LLC, 624260 Asbest (RU)
(72) Inventor: Hoffmann, Harry, 25436 Tornesch (DE)
(74) Representative: Zenz

(57) **Abstract**

A production plant integrating a desalination plant with a seawater intake, producing potable water and brine, a power plant providing electrical power to the desalination plant and a crystallization system receiving the brine and crystallizing the salts contained therein.

The power plant is coupled to the crystallization plant so to provide hot steam as well as electrical power to the crystallization system. The production plant further comprises an electrolysis system for magnesium production, which is coupled to the crystallization process to receive Carnallite extracted from the brine, the electrolysis plant being further coupled to the power plant so to receive hot steam and electrical power from the power plant.

Warmed cooling water from the power plant and the crystallization is injected into the seawater intake of the desalination plant.

## Description

The invention pertains to the field of production of potable water from seawater and further to the field of production of valuable materials from seawater for further processing.

It is known that the water needs of municipalities, industry, and citizens must be met, even as the difficulty and cost of developing new water resources increases. Desalination has become a more popular option in regions where there is abundant water that is unsuitable for use due to high salinity, and there are opportunities for desalination plants that utilize thermal, electrical or mechanical energy to separate the water from the salts.

EP 1 809 408 A2 discloses a water desalination process and apparatus. The choice of the desalination process depends on many factors including salinity levels in the raw water, quantities of water needed, and the form of available energy.

Reverse osmosis is generally accepted as an economical and energy-efficient method for desalination of highly saline water. Modern reverse osmosis membranes have such high salt rejection that they are capable of producing potable water from seawater in a single pass through the membrane.

Another common technology is the multi-stage flash distillation (MSF) of seawater. Portions of the seawater are flashed into steam in multiple stages.

Furthermore, some modern reverse osmosis systems are capable of achieving high percentage recovery of fresh water from seawater. With better recovery, the salinity of the concentrated brine increases. Disposal of such brines presents significant costs and challenges for the desalination industry, which result in longer start-up lead times and higher cost of water.

There different basic ways to deal with brines from seawater desalination, e.g. discharge to the sea, deep well injection, and zero liquid discharge systems. The discharge of brines back into the sea can affect the organisms in the discharge area.

Evaporation and electrodialysis, which are proven processes for seawater desalination, can make a brine of considerably higher concentration than can be recovered from reverse osmosis, but these processes consume more energy than reverse osmosis in seawater desalination.

Other than return to the sea, the alternatives for disposal of brines from desalination plants are limited. Evaporation ponds are generally undesirable and expensive due to the cost of land. Moreover, they are useful only in climates where evaporation rates exceed rainfall. Deep well disposal is often used for hazardous wastes but capital costs make the process prohibitive. Furthermore, the applicability of deep well injection for large desalination plants is questionable because of the sheer volume of the brine.

The extraction of salt from the brine is not economically feasible, because it requires much thermal energy, the resulting product is salt of poor quality an low sales value. As a result the price for water will increase to a much higher level and also the CO2 emissions per ton of water will increase.

Apart from the potable water, seawater has many valuable constituents, but their value can only be realized if they can be recovered economically. There are ways to recover many of these valuable seawater constituents, but the economics of the recovery are often dismal because of the low concentrations of those constituents, and due to interference by other constituents of seawater.

One example of a valuable component of seawater is sodium chloride (NaCl) which can be recovered by means of electrodialysis. Further Mg++ ions are the second most abundant cations in seawater. Seawater is therefore also used as the feedstock for the production of magnesium compounds. Essential to making the lightest, thinnest products, Magnesium provides durability, heat dissipation performance and radio frequency shielding giving user's valuable quality expected in most products nowadays. Magnesium's potential for ecological reliability, high performance, and outstanding design flexibility. Already a preferred metal of choice in the automotive industry (contributing to lower weight, less fuel consumption and pollution, competitive manufacturing and assembly costs), Magnesium is also used to provide strength, rigidity and corrosion resistance to aluminum alloys, reduces sulphur in steel and improves the properties of nodular iron. Light, strong, tough, safe and cost efficient, Magnesium is an all-encompassing solution to a mobile lifestyle and environmental responsibility.

A commercial method for recovering Mg++ is to add a base (usually lime) to seawater in order to precipitate Mg(OH)₂. One disadvantage that the recovery of magnesium from seawater has in comparison with magnesium recovery from magnesite is the low concentration of magnesium in the seawater. If the magnesium content of the brine feed could be increased at a reasonable cost, the production costs for magnesium would be reduced. Accordingly, this would allow manufacturers using seawater as a feedstock to compete more effectively with magnesium producers who use magnesite. Moreover, this would help alleviate the environmental damage associated with magnesite mining operations as well as the generation of the large amount of carbon dioxide incident to the processing of magnesite.

In view of the above, a need currently exists for processes and systems that can efficiently recover purified water from saline water and for recovering valuable chemicals or materials, such as sodium chloride, magnesium, bromine and the like from saline water in an economical manner.

This problem is solved by an apparatus and method with the features as given in claim 1 and claim 10 respectively.

The process according to the invention combines several known processes in an most advantageous manner. The core features of the invention are the combination of a seawater desalination from which the brine is fed into a crystallization process producing Carnallite which in turn is supplied to a electrolysis plant producing magnesium. A power plant is powering the seawater desalination plant with electrical energy and is providing electrical power and steam to the crystallization process. The same power plant provides electrical power and steam to the electrolysis.

The solution according to the invention therefore is the extraction of almost all materials from the seawater. The production costs and energy consumption will come down as compared to the isolated processes because of the synergistic combination.

Therefore, according to the invention, the power plant, the desalination plant, the crystallization system and the electrolysis system are built near to each other so to provide exchange of energy and production with minimum energy losses and leading to synergetic effects which in turn significantly reduce the amount of energy needed in total compared to the energy needed if those processes were not combined in the inventive manner.

Also materials produced by the single processing, including waste materials, are circulating through the processing used as raw material for the next process to reduce water pollution and ground pollution.

One of the crucial features of the invention is therefore the approach to integrate the relevant processes, particularly to reduce the spatial distance between the single processes in a way so that energy losses through transportation (e.g. transportation of steam) are greatly reduced. The apparatus and process will therefore be realized as an integrated plant, incorporating the power plant, the desalination plant, the crystallization plant and the electrolysis plant. This feature is implied by the fact that hot steam is provided by the power plant to various processes which is only feasible over short distances without considerable losses. Further, short distances allow for products to be transported and in part cycled through the inventive plan. Cycling in this context means that products of a production process somewhere in the integrated plant can be re-fed to a previous processing step if necessary. The processes are structured partly in a sequential manner and partly in a parallel manner.

The processing according to the invention starts with a desalination (e.g. flash distillation or reverse osmosis) process. In that process, which is known from e.g. the above citation, there is potable water produced and there is an up concentrating of substances in sea water resulting in brine with increased concentration of various compounds. In this stage of processing potable water and brine are the products of the process. The potable water will be sold to the municipality and the brine is the raw material for the following steps of the processing, which are crystallization and evaporation. The desalination is power by a power plant integrated with the desalination plant in a common plant complex. The power plant produces steam and electrical power. The desalination process is powered by the power plant by use of its heat energy (steam) and/or electrical power.

The brine is supplied to the crystallization plant, which is also a part of the integrated plant complex. The crystallization can be a Multi Flash Stage (MFS) or any kind of thermal process with industrial multi-stage crystallization. Various crystallization methods and setups are known from the art. A respective teaching can be found e.g. in Industrial Crystallization, Edited by J.W. Mullin, Butterworth-Heinemann, 2001 which is incorporated by reference herewith.

In any case, the required energy for the operation of the thermal processing during crystallization is steam and electricity, which will be produced by the integrated power plant. The use of steam from the power generation plant minimizes the energy costs of this unit and results in a very high efficiency in respect to the fuel consumption. For the condensing of vapors seawater is used as cooling water. The warmed cooling water will again be used as feed to the desalination unit, which reduces the energy demand of this unit.

As the brine evaporates, calcium carbonate is the first major mineral deposited. Gypsum and then salt crystallize next in the evaporation sequence, and finally potash salts, primarily as Carnallite (KCl · MgCl₂ · 6H₂O).

Therefore, by crystallization and evaporation Sodium Chloride, potable water, Bromine, Potassium Chloride, Carnallite, Gypsum and hot water (warmed up cooling water) will be produced from the brine as result of the processing. Finally the brine will be almost completely eliminated. The products like potable water, salt, Bromine, Potassium Chloride, Gypsum will be sold to the local or international market.

A key advantage of the processing and setup according to the invention is therefore the production of high quality potable water without producing considerable amounts of unwanted residual materials. This is possible because processes and plants from different industries are combined in a novel and advantageous manner. By means of the invention, the negative effects of desalination are insignificantly in this approach as compared to desalination according to the state of the art. There is no disposal of significant amounts of brine necessary since the brine itself is used as source material for the crystallization and electrolysis. The processing of the brine for production of valuable products in turn is possible because of the coupling of the processes and the synergetic effect of the coupling, leading to economically attractive conditions for each of the coupled processes. This inventive concept may be described as "multiprocessing". It combines seawater desalination, magnesium production and processing of by-products so to reduce any unwanted products. The processes as such may be known from the art but the processes are coupled serially or in parallel to provide synergistic effects. The energy needed per product is thereby reduced because the amount of wasted energy is reduced by using more heat energy or energy of heated materials - due to the coupling the heat losses are greatly reduced. The CO2 emission per product is reduced because the energy required is used efficiently and almost entirely (e.g. by using heat energy of cooling water which would be wasted in processes according to the state of the art). Finally, although high quality potable water is produced, there is almost no problem regarding the disposal of brine because the brine is fully exploited. The desalination is therefore much more environmentally friendly than know processes for desalination.

The Carnallite produced from the brine will be forwarded internally as raw material for the magnesium electrolysis. On principle, the electrolysis may be any suitable electrolysis method for producing Magnesium from Carnallite as known from the art, e.g. from Metal Production by Molten Salt Electrolysis, Kai Grjotheim, Li Qingfeng, China University of Mining and Technology Press, 1998 or Magnesium Technology, Horst E. Friedrich, Barry Leslie Mordike, Springer 2006.

The process of producing Magnesium from Carnallite via electrolysis was developed in the USSR (Russian National Aluminum-Magnesium Institute (VAMI)). The essence of the general process of magnesium production at existing plants operating on various sources of raw materials, is finally to obtain 6 Water Carnallite KCl · MgCl₂ · 6H₂O by recrystallization of Carnallite minerals or by synthesizing it from potassium or magnesium chloride solutions followed by the subsequent drying, melting and electrolytic decomposition by magnesium and chlorine. This technology is justified by the Carnallite property to melt in the water of crystallization, and to hydrolyze partially during dehydration to form basic salts, magnesium oxide and hydrogen chloride.

The Carnallite will pass a first stage of dehydration treatment in fluidized bed by the steam of hot gases, containing hydrogen chloride with production of solid dehydrated product, containing below 0,5 wt% of magnesium oxide and below 3,0 wt% of water.

Second stage of Carnallite treatment is done in electrical melting furnaces with production of melted anhydrous Carnallite having water content below 0,05 % and magnesium oxide below 0.5 % at temperature 520-700 °C.

Electrolysis of obtained melted Carnallite's MgCl₂ is performed using flow line technology. Main products of electrolysis are magnesium metal and chlorine. Obtained in course of electrolysis process metallic magnesium is fed into refining furnaces where it is refined from impurities and casted into ingots. Optional production of alloys, flat rolled and other magnesium based value added products can be part of the process.

Gaseous chlorine obtained during the electrolysis process is cleaned from dust and water is directed to liquation unit to produce liquid chlorine. Gaseous chlorine is also directed to hydrogen chloride synthesis unit and production of hydrochloric acid. Part of obtained gaseous hydrogen chloride is directed to the first stage of Carnallite dehydration where it is mixed with hot heat carrier passed through Carnallite layer.

Waste gases containing HCl, NaCl, KCl and other impurities are fed to gas cleaning where they are absorbed by water to produce hydrochloric acid that is fed to the crystallization process for Carnallite production. Process gases from electrolysis process containing Cl₂ and HCl are sent to gas cleaning device. Gas cleaning is done by water suspension of sorbent Ca(OH)₂. The Spent sorbent after removal of active chlorine is fed to the crystallization process for Carnallite production.

Spent electrolyte formed in the course of electrolysis and containing salts of potassium and sodium chlorides and also muds, sublimates and other solid by-products (wastes) of magnesium metal production are fed into the crystallization process for Carnallite production.

Thus all by-products obtained in the course of magnesium metal production are utilized in the Carnallite production. It is a significant advantage of the process from environmental and economic efficiency point of view.

The products of the electrolysis, magnesium and by-products like chlorine gas, HCl, CaCl₂ are sold to the local and international market. As said, the electric energy for the electrolysis will be produced by the internal power plant in combination with the required steam. A surplus, of electricity will be sold to the municipality.

Integrated part of the inventive production plant is the power generation which can be based on various fossil fuels like natural gas, fuel oil, residuals, coal or on solar energy or on combination of these (hybrid power plant). In any case, the power plant generates hot steam and power, which leads to high efficiency and fuel utilization factors. Heat and electric power are both essential for the coupled processing facilities. This avoids that a relevant amount of energy is wasted. However, the processes as described above create a large demand of steam so that more electricity will be produced than required by the processing, if a high energy efficiency is targeted. This surplus of electricity will be sold to the local market or the municipality.

The advantage of the invention is the almost complete absence of waste material and the high efficiency of the combined and integrated processing. As result the production costs for each single product are low, and the only environmental impact is the CO₂ emission of the power generation. Because the total CO₂ emission has to be divided into the CO₂ emission for each single product, the CO₂ emission for each product, especially for magnesium, is much lower than in a conventional processing.

The invention will now be described by under reference to the drawing.
Fig. 1 shows a process diagram of a first embodiment of the method and production plant according to the invention;
Fig. 2 shows a block diagram of an embodiment of an integrated production plant according to the invention;

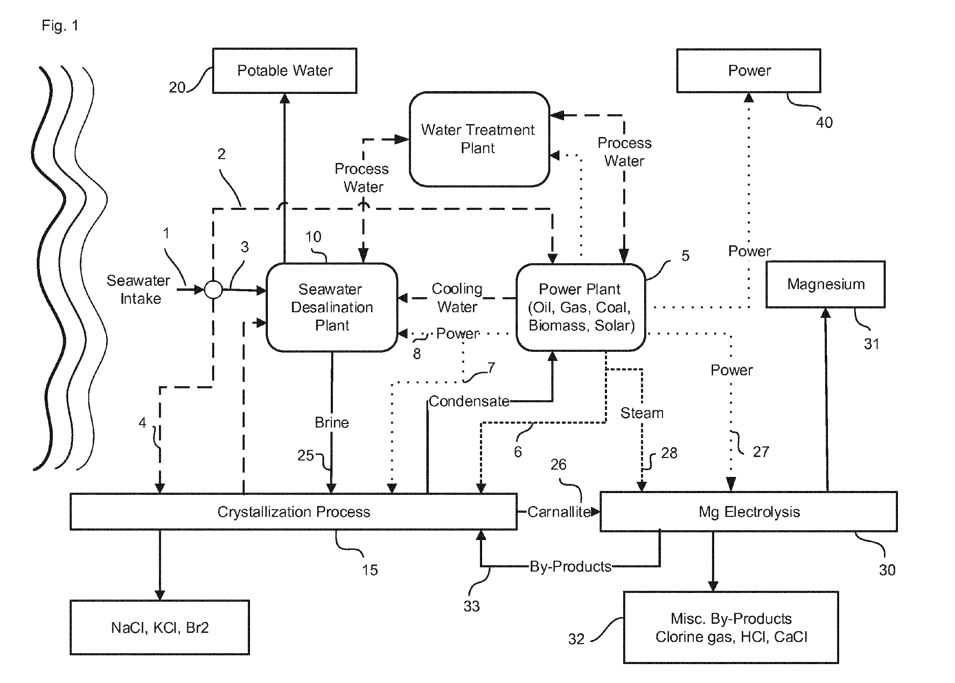

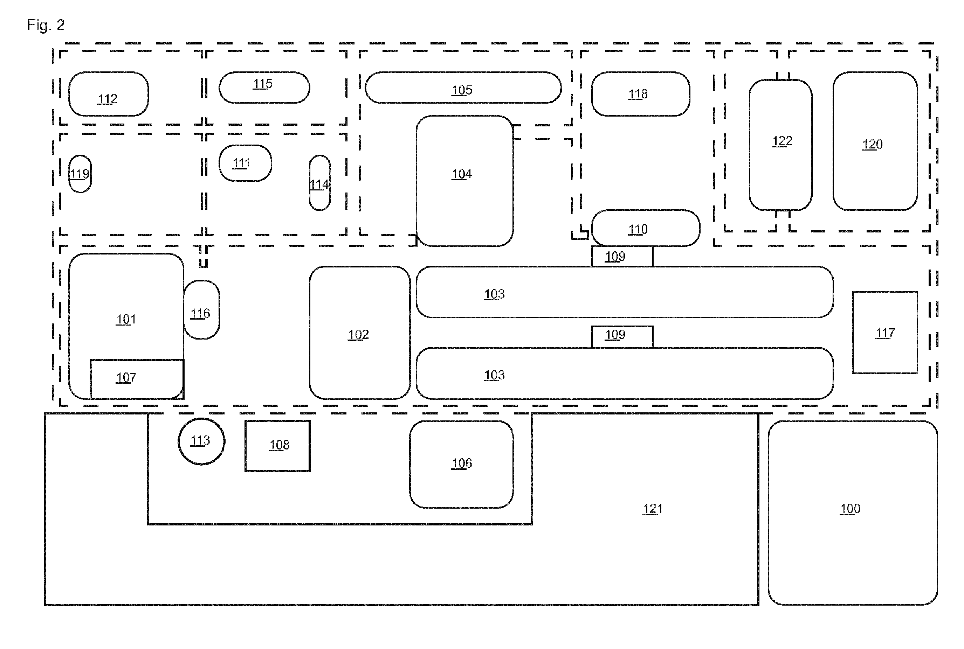

The simplified flow scheme as shown in Fig. 1 in an abstracted manner is actually to be built as an integrated plant (Fig. 2), having all the individual processes integrated in an area of limited dimensions. The actual dimension depend strongly on the choice of the kind of power plant (e.g. oil, gas or coal fired or solar) and the amounts of products produced. However, the plant is built in a manner so that the products and energy, particularly the steam generated by the power plant can be efficiently distributed throughout the integrated plant.

The inventive plant and method will now be described by following the ways and cycles of the materials and energies.

Starting from the left part of the figure, there is a seawater intake 1 collecting seawater from a stretch of water containing saltwater. To this end, the plant is build nearby an ocean or a sea.

The seawater is distributed from a seawater distribution point and is conveyed via a pipe 2 to the power plant 5, where it is used as cooling water. A major part of the seawater is conveyed from the seawater distribution point to the desalination plant 10 via pipe 3. A further part of the seawater is conveyed via pipe 4 to the crystallization system 15 where it is used as cooling water.

In the desalination plant 10 the seawater is desalted by means of a multi-stage flash process. A reverse osmosis processes may be used too. Reverse osmosis is a commonly used demineralization process relying on a semipermeable membrane to effect the separation of dissolved solids from a liquid.

The preferred multi-stage flash process is driven by thermal energy. This thermal energy may be provided by the steam from the power plant. Respective systems are available at the market and therefore are not described in detail in this application. In that regard it is referred to available technical information like Jane Kucera, "Reverse Osmosis", John Wiley & Sons, 2011 or "Reverse Osmosis and Nanofiltration", American Water Works Association, 2007.

If using a multi-stage flash process, according to the invention pre-warmed water used as cooling water in other processes is injected to the desalination. To this end, the pre-heated cooling water from the crystallization plant and/or the power plant is fed into the desalination system, e.g. mixed with the incoming seawater. Since the desalination relies on evaporation of the water taken in, using the warmed or heated cooling water from other processes significantly reduces the energy required by the desalination process. Again, this approach is only possible due to the integrated setup of the processes an in view of the fact that in the inventive concept it is possible to convey the heated cooling water with its heat energy to the desalination plant.

In any case, the desalination plant outputs purified, potable water 20 and brine 25. In the latter the up-concentrated salts removed from the potable water are contained.

The brine 25 is fed into a crystallization process. Usable crystallization processed have been described above (see also Price, Chris J., "Take Some Solid Steps to Improve Crystallization", Chemical Engineering Progress, September 1997; Geankoplis, Christie J., Transport Processes and Unit Operations, 3rd Ed., Prentice Hall, New Jersey, 1993; Brown, Theodore L., Chemistry: The Central Science, 5th Ed., Prentice Hall, New Jersey, 1991; Industrial Crystallization, Tavare, Plenum Press, New York, 1995).

In this particular embodiment, for crystallization a number of steps are applied. To avoid incrustations in the coldest effect, anti-scaling agent has to be added to the pre-concentrate from the reverse osmosis plant. About 93 % of the total evaporation is done in this unit. By an interconnection of the stages most of the CaSO₄ in the feed solution crystallizes as Penta salt (CaSO₄ x Na₂SO₄ x 3 H₂O). Furthermore the main part of NaCl in the feed is removed by centrifuges with a purity of >99% on dry base. The remaining mother liquor is fed to the next step of Boron removal.

Boron compounds are highly soluble. Their concentration would build up in the Carnallite production process and contaminate the Carnallite. Therefore Boron is selectively absorbed on a resin. For the regeneration of the resin diluted HCl solution, process condensate and diluted NaOH solution are necessary. The mixed solutions from the regeneration, which contain no hardness, probably can be used as make up water for the cooling towers except the Boron content is critical. The Boron removal from concentrated Mg containing brines is a proven standard technology. The de-boronated solution is fed to a CaSO₄ precipitation unit.

The de-boronated solution from NaCl crystallization contains a considerable amount of MgSO₄, which is reacted in the CaSO₄ precipitation by addition of CaCl₂ solution to MgCl₂ and precipitating CaSO₄ (anhydrite). Further feed streams are recycled from the Carnallite crystallization (to recover the CaCl₂ excess in the solution resulting from the CaSO₄ precipitation and to limit the concentration of CaCl₂ in the Carnallite crystallization) and some pre-concentrated seawater for adjusting the concentration. The CaSO₄ precipitation is operated batch-wise at elevated temperature. The batch-wise precipitation of fine solids is a proven technology in brine purification processes. Solid waste product is CaSO₄, which is de-brined with filter-presses. The hot clarified solution is fed to a de-Bromination unit.

Bromide is present in seawater only at low concentration. It is known that Bromide ions can be included in the Carnallite crystals. This means that Bromide will likely be returned with the spent electrolyte or with products resulting from the flue gas treatment belonging to the Mg electrolysis factory (HCl, CaCl2). In the de-Bromination, fed with acidified solution from the CaSO₄ precipitation unit, Bromide is oxidized in a column by Cl₂ to Br₂, which can be condensed as liquid from the vapor leaving the column.

A following unit is fed with solution from the de-Bromination. Also HCl solution is fed to the Spent Electrolyte dissolving to ensure that all MgO and (even more important) all metallic Mg are dissolved. Gaseous Hydrogen resulting from the reaction of Mg with HCl and/or H2O is diluted by a large amount of air streaming over the liquor surface below the explosion limit. This is related with evaporation losses into the air. The temperature in the dissolving reactors is controlled by direct injection of steam. The solution leaving the dissolving is neutralized with NaOH before it is fed to the second NaCl crystallization.

The second NaCl crystallization is performed in two crystallizers in series with counter current flow of the heating media. The first, hotter stage is heated by steam. The vapor from the hot stage is used for heating the colder stage. The vapor from this stage is mainly condensed in a direct condenser. NaCl crystallizes in both effects. NaCl produced in the hot effect is recycled to the colder effect, from where the NaCl crystals are removed by a centrifuge. The solution produced in the first effect is concentrated in MgCl₂ and KCl. As solids contains this stream besides fine CaSO₄ crystals only minor amounts of crystalline NaCl.

After the second NaCl crystallization, the Carnallite crystallization consists of two draft tube and baffle crystallizers (DTB) in series. Carnallite is crystallized by vacuum cooling. A small amount of steam is used to dissolve small Carnallite crystals in a recycle stream of baffle overflow of the first DTB. The crystallization of Carnallite goes along with the crystallization of NaCl, whereas the ratio of produced Carnallite/NaCl crystals is lower than the demand of the Mg factory for the Carnallite composition. Therefore special efforts are made to crystallize Carnallite as coarse as possible to be able to remove an appropriate part of the smaller NaCl crystals with the baffle overflow of the second DTB crystallizer and by wet screening of the suspension from the second DTB. The coarse fraction from the wet screen is de-brined with a centrifuge. The Carnallite cake with a NaCl content of about 5% is conveyed to the dryer currently belonging to the scope of the Mg factory.

The filtrate of the wet screen and the baffle overflow of the second DTB are fed to a thickener. The clarified Carnallite mother liquor (ML) is recycled mainly to the spent electrolyte dissolving. A small part of the ML is purged. The remaining part of the ML is fed to the CaSO₄ precipitation. The thickener underflow is fed to the Carnallite decomposition.

The steam needed for the heaters of the crystallization vessels is provided by the power plant 5 via a pipes 6. Further, electrical power is provided by the power plant via lines 7, 8 to the crystallization and the desalination respectively.

In the different steps of the crystallization process NaCl, KCl, Br are extracted from the brine. Those products are collected and can be sold as valuable raw materials.

The Carnallite 26 is conveyed from the crystallization to the nearby electrolysis plant 30. The process of the electrolysis has already been described above. For processing brines from sea water desalination plant in process of electrolysis of anhydrous Carnallite (KCl · MgCl₂ · 6H₂O) produced from the brine is selected in this embodiment.

The Carnallite passes a first stage of dehydration treatment heated by the steam 28 from the power plant 5. Further Carnallite treatment is done in electrical melting furnaces with production of melted anhydrous Carnallite. Electrolysis of obtained melted Carnallite's MgCl₂ is performed using flow line technology. Main products of electrolysis are magnesium metal and chlorine. Obtained in course of electrolysis process metallic magnesium is fed into refining furnaces where it is refined from impurities and casted into ingots. Optional production of alloys, flat rolled and other magnesium based value added products 31 can be part of the process.

It is important that the electrolysis demands both steam and electrical power from power plant 5. These different forms of power are provided via line 27 and piping 28.

Thus, the power plant provides steam for the crystallization as well as for the electrolysis and provides electrical power to the desalination, the crystallization and the electrolysis at the same time. The energy available as steam and electrical power from the power plant is therefore used in a very efficient manner. Actually in this embodiment, steam required by the consuming processes and the very efficient use of the steam leads to a situation, where there is excess electrical power 40 which can be fed to the regional grid. This is due to the fact that the demand for energy of the crystallization 15 and electrolysis can be met by the steam from the plant to a significant degree which in turn is a result of the integrated approach of production according to the invention.

The electrolysis further produces several by-products 32, particularly Chlorine gas, HCI, and CaCl which can be sold as raw materials. Gaseous chlorine obtained at electrolysis process is cleaned from dust and water is directed to liquation unit to produce liquid chlorine. Gaseous chlorine is also directed to hydrogen chloride synthesis unit and production of hydrochloric acid. Part of obtained gaseous hydrogen chloride is directed to the first stage of Carnallite dehydration where it is mixed with hot heat carrier passed through Carnallite layer.

Furthermore, electrolyte 33 formed in the electrolysis containing salts of potassium and sodium is fed to the crystallization process again. Waste gases of the furnaces, containing HCI, NaCl, KCl and other impurities are fed to gas cleaning where they are absorbed by water to produce hydrochloric acid that is used for Carnallite production in the crystallizers. Process gases from electrolysis process containing Cl₂ and HCl are sent to a gas cleaning device. Gas cleaning is done by water suspension of sorbent Ca(OH)₂. Spent sorbent after removal of active chlorine is fed to the Carnallite production.

This cycling and complete exploitation of valuable ingredients is only possible due to the spatial proximity of the individual processes to each other.

The coupling of the individual process is therefore further refined by not only using the energy and products in a sequence of processed but by cycling or re-feeding products or energy brought by any of the processes in other systems. As already explained, products from the electrolysis are re-fed to the crystallization. Further, condensate from the crystallization which is containing energy is fed to the power plant so that the production of steam and energy is optimized by using pre-heated water. Cooling water from the power plant and the crystallization is fed to the desalination plant. Finally, a central water treatment plant cleanses process water from the desalination and the power plant.

The process and plant according to the invention is therefore optimized, so that almost nothing from the seawater desalination is left over as a waste but the seawater is almost completely exploited. This is done in an efficient and economic manner because the energy required is used in an extremely efficient way by using steam and electrical power in different processes and coupling this processes so to reach an synergistic effect.

This concept according to invention therefore select from a number of known process those processes, which can be coupled in a partly sequential and partly parallel manner in order to use the energy and materials consumed in an very efficient manner. This effect can be realized if the processed and respective plants are brought in close spatial proximity to each other so that steam, energy and products can be exchanged and transported in a continuous or quasi-continuous manner.

Fig. 2 shows a schematic layout of a production plant according to an embodiment of the invention. On an area of roughly 800 m by 3100 m such an exemplary production plant is integrated.

The production includes key areas with auxiliaries and services located in individual buildings connected by transport galleries:
- Power plant 100
- Carnallite dehydration including:
   o Carnallite dehydration area 101;
   o Fluid bed gas cleaning 107;
   o silos for dehydrated Carnallite 116.
- Dehydrated Carnallite area 102.
- Reduction including:
   o electrolysis/reduction 103;
   o chlorine gas filtering unit 109;
   o chlorine compressor 110.
- Gas scrubbing of reduction including:
   o gas scrubbing of metallurgical production 108;
   o calcium chloride preparation;
   o stack 113.
- Magnesium refining and casting including:
   o magnesium refining and casting 104;
   o magnesium ingots storage 105
- Crushing including:
   o - electrolyte and slag crushing 106;
   o - slag crushing.
- Preparation of 34% hydrochloric acid and hydrogen chloride including:
   o synthesis and desorption of hydrochloric acid
   o dry scrubbing of Cl fumes;
   o hydrogen production 112;
   o hydrochloric acid storage 115;
- crystallization system 121;
- HCl preparation 111;
- Hydrogen preparation 112;
- Release for residual gases 113;
- Air compression and nitrogen station 114;
- storage for Hydrochloric acid;
- storehouse, administration and parking 118, 119, 120, 122;

Presented preliminary variant of the areas layout is provided considering the minimization of the inter-shop handling operations connected with material flows and flows of auxiliaries. The gas scrubbing equipment and auxiliaries is close to the process equipment. The metallurgical production on the layout allows combining it with Carnallite production in single production complex.

## Claims

1. Production plant, with
a desalination plant with a seawater intake, producing potable water and brine,
a power plant providing electrical power to the desalination plant,
a crystallization system receiving the brine and crystallizing the salts contained therein,
**characterized in that**,
the power plant is coupled to the crystallization plant so to provide hot steam as well as electrical power to the crystallization system,
an electrolysis system for magnesium production, which is coupled to the crystallization process to receive Carnallite extracted from the brine, the electrolysis plant being further coupled to the power plant so to receive hot steam and electrical power from the power plant.

2. Production plant according to claim 1, wherein the crystallization system is a multi-stage crystallization system with multiple crystallizers.

3. Production plant according to claim 1 or claim 2,
wherein the desalination plant is a Multi-stage flash distillation (MSF) type plant an wherein warmed cooling water from the power plant and/or warmed cooling water from the crystallization system is injected to the seawater intake of the MSF-desalination to reduce the energy required for evaporation.

4. Production plant according to claim 1 or claim 2,
wherein the desalination plant is a reverse-osmosis type plant.

5. Production plant according to any of the preceding claims, wherein the Magnesium electrolysis is coupled to the crystallization system so that electrolyte containing salt can be conveyed for processing from the Magnesium electrolysis back to the crystallization system.

6. Production plant according to any of the preceding claims, wherein the power plant is a fossil fuel fired type of power plant.

7. Production plant according to any of the preceding claims, wherein the crystallization system is coupled to the power plant to provide hot condensate from the crystallization to the power plant.

8. Production plant according to any of the preceding claims, the crystallization system being adapted to produce NaCl, KCl, and Br as separate products apart from Carnallite.

9. Production plant according to any of the preceding claims, wherein the Magnesium electrolysis is adapted to produce Chlorine gas, HCl, and CaCl as separate products apart from Magnesium.

10. Production plant according to any of the preceding claims, wherein a water treatment plant for cleansing of process water is coupled to the power plant and the desalination plant.

11. Method for production of potable water and Magnesium, with the steps:
providing seawater from a seawater reservoir to a desalination plant and producing potable water and brine,
generating power by means of a power plant and providing electrical power from the power plant to the desalination plant,
crystallizing the brine in a multi-step crystallization process and extracting Carnallite from the brine by way of crystallization,
providing electrical power and hot steam from the power plant for the crystallization,
melting the produced Carnallite and electrolyzing the Carnallite melt for magnesium production, wherein the melting is effected with use of hot steam from the power plant and the electrolysis is powered by electrical power from the power plant.

12. Method according to claim 11, with the further steps of producing NaCl, KCl and Br in the crystallization process.

13. Method of any of claims 11 and 12, wherein the seawater is desalinated using a Multi-stage flash distillation (MSF) type plant, whereby warmed cooling water from the power plant and/or warmed cooling water from the crystallization system is injected to the seawater intake of the MSF-desalination to reduce the energy required for evaporation.

14. Method of any of claims 11 to 13, wherein spent electrolyte is collected from the electrolysis system and the spent electrolyte is fed into the crystallization system and is crystallized with the brine from the desalination.

15. Method of any of claims 11 to 14, wherein the in the process of the Magnesium electrolysis Chlorine gas is cleaned from dust and water and is liquated to produce liquid Chlorine.
